# EUROPEAN PATENT APPLICATION

(11) **EP 1 129 910 A1**
(43) Date of publication of application: **05.09.2001**
(21) Application number: 99954430.7
(22) Date of filing: 08.11.1999
(51) Int. Cl.: B60R 21/26

(54) **GAS GENERATOR**

(30) Priority: 09.11.1998 JP 31720798
(71) Applicant: Nippon Kayaku Kabushiki Kaisha, Tokyo 102-8172 (JP)
(72) Inventor: TAGUCHI, Seigo, Himeji Factory of Nippon Kayaku KK, Himeji-shi, Hyogo 679-2123 (JP); OCHI, Hiroyuki, Himeji Factory of Nippon Kayaku KK, Himeji-shi, Hyogo 679-2123 (JP); SAKO, Kenji, Himeji Factory of Nippon Kayaku KK, Himeji-shi, Hyogo 679-2123 (JP); KISHINO, Yoshiyuki, Himeji Factory of Nippon KK, Himeji-shi, Hyogo 679-2123 (JP)
(74) Representative: Thévenet, Jean-Bruno
(86) International application number: JP9906206
(87) International publication number: WO0027673

(57) **Abstract**

A gas generator (Y) capable of distributing hot gas generated at the time of initial combustion in the axial direction of a filter member so as to prevent the filter member from being thermally damaged in order to increase the slag collecting and cooling efficiencies, wherein the gas passing efficiency of the filter member (3) is differentiated in the axial direction of a housing (1), and the filter member (3) is so constructed that the shaft end part side of the housing (1) having an ignitor (5) is more difficult to pass gas therethrough than the other part side of the housing (1) leading to the other shaft end part of it.

## Description

### TECHNICAL FIELD

The present invention relates to a gas generator for developing a passenger-side air bag or an air bag for side collision of an automobile.

### BACKGROUND TECHNIQUE

A gas generator for instantaneously developing an air bag for protecting a passenger from an impact generated at the time of collision of an automobile is incorporated in an air bag module mounted in an instrument panel. This gas generator instantaneously generates a large amount of hot gas upon reception of a collision detection signal from an impact sensor at the time of collision.

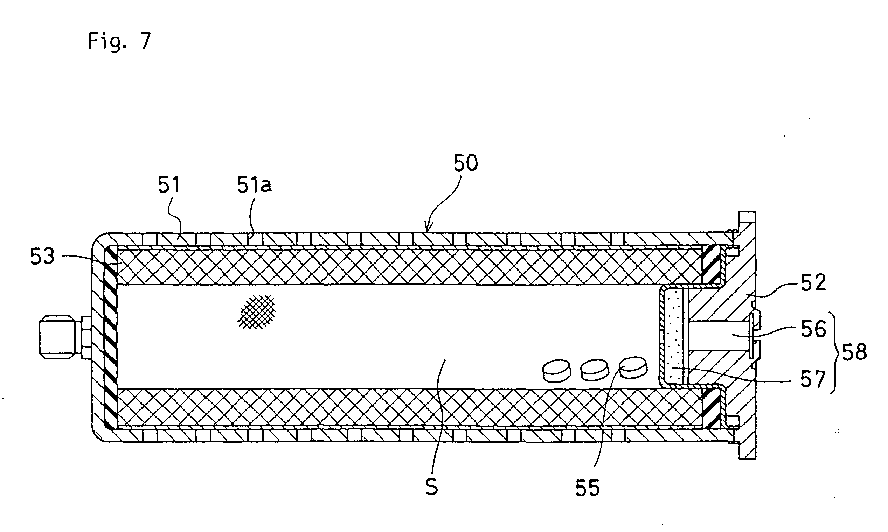

Fig. 7 shows an example of the gas generator for developing the air bag. This gas generator includes an outer cylinder 51, and a long cylindrical housing 50 forming a closed space S incorporation with a lid member 52. A cylindrical filter member 53 extending toward an axial center from the outer cylinder 51, and a gas generating agent 55 are accommodated in the housing 50 sequentially. An igniter 58 is mounted to the lid member 52. This igniter 58 comprises an ignition tool 56 which is ignited by an impact detection signal from an impact sensor, and an inflammation agent 57 which is ignited by the ignition of the ignition tool 56. In this gas generator, the ignition tool 56 is ignited by the impact detection signal from the impact sensor, and flame ignites the inflammation agent 57. Then, the gas generator burns a gas generating agent 55 by the flame of the inflammation agent 57 from a direction of the lid member 52 to instantaneously generate a large amount of hot gas. The large amount of hot gas generated in the housing 50 flows into the filter member 53, the gas passes through process of slag collecting process and cooling process and is discharged into the air bag from gas discharging holes 51a of the outer cylinder 51. With this operation, the air bag is instantaneously developed.

Conventionally, a metal filter member 53 is used in the gas generator. The metal filter member 53 is formed in such a manner that a metal mesh or metal fiber sheet, for example, is wound into a coil shape, or an aggregate including this is press-formed into a cylindrical shape. The metal filter member 53 is formed such that ability (voidage) for allowing gas to pass through the metal filter member 53 equally over an axial direction thereof.

Therefore, in the case of a gas generator in which the gas generating agent 55 is burned from the direction of the lid member 52 (one shaft end of the housing 50) to develop the air bag, the hot gas generated at the time of initial combustion flows directly into the filter member 53 at the side of the lid member 52. If the hot gas collectively flows at the side of the igniter 58 of the filter member 53, there is an adverse possibility that the metal mesh or the like is melted by heat of the hot gas. If the igniter 58 side of the filter member 53 is thermally damaged, the hot gas is liable to flow into the filter member 53 more, and slag collection efficiency or cooling efficiency is deteriorated.

If the filter member 53 is thermally damaged, slag having large grain generated at the time of initial combustion is discharged out from the housing from the damaged portion, which damages the air bag.

Thereupon, it is an object of the invention to provide a gas generator capable of preventing a filter member from being thermally damaged and capable of enhancing slag collecting efficiency and cooling efficiency by distributing hot gas generated at the time of initial combustion in an axial direction of the filter member.

### DISCLOSURE OF THE INVENTION

A first invention relates to a gas generator for developing a passenger-side air bag or an air bag for side collision of an automobile in which a gas generating agent in a filter member is burned by an igniter. In this gas generator, the gas passing efficiency of the filter member is differentiated. The filter member includes a structure which is easy to pass gas therethrough and a structure which is difficult to pass gas therethrough. The igniter is ignited to start the combustion from the gas generating agent in the filter member which is difficult to allow gas to pass therethrough. The hot gas generated in the filter member flows in the structure of the filter member which is difficult to pass the gas and at the same time, also flows in the structure which is easy to pass gas therethrough via the filter member.

With this structure, it is possible to distribute the hot gas generated in the filter member from the beginning of combustion of the gas generating agent, and it is possible to prevent the gas from concentrating on a portion where the gas generating agent is burned by the igniter.

Therefore, according to the first invention, the entire filter member is effectively utilized, and the slag collecting efficiency and the cooling efficiency of the hot gas can be enhanced. In the first invention, since the hot gas does not concentrate on the side where it is difficult to allow the gas to pass therethrough, it is possible to prevent the filter at the combustion portion from being thermally melted at the initial stage of combustion of the gas generating agent. Therefore, it is also possible to prevent the slag having great grain from being discharged directly into the air bag. Thus, the air bag is properly developed by a large amount of clean gas discharged from the gas generator without being damaged by hot slag.

A second invention relates to a gas generator for developing a passenger-side air bag or an air bag for side collision of an automobile in which the gas generating agent in the filter member is burned from the shaft end side of the housing to which the igniter is mounted. In this gas generator, the gas passing efficiency of the filter member is differentiated in the axial direction of the housing. The filter member is so constructed that the shaft end side of the housing to which the igniter is mounted is more difficult to allow the hot gas to pass therethrough than a portion of the housing closer to the other shaft end. If the igniter is ignited, the combustion of the gas generating agent in the filter member is started from the shaft end side of the housing to which the igniter is mounted to generate the hot gas. The hot gas generated in the filter member flows in from the shaft end side of the housing to which the igniter is mounted with respect to the filter member at the same time, the gas also flows from the other portion where it is easy to allow the gas to pass therethrough via the filter member.

With this structure, it is possible to distribute the hot gas generated in the filter member from the beginning of combustion of the gas generating agent, and it is possible to prevent the gas from concentrating on a portion where the gas generating agent is burned by the igniter.

Therefore, according to the second invention, the entire region of the filter member can be effectively utilized, and the slag collecting efficiency and the cooling efficiency of the hot gas can be enhanced. In the second invention, since the hot gas does not concentrate on shaft end side of the housing to which the igniter is mounted, it is possible to prevent the filter member from being thermally melted at the initial stage of combustion of the gas generating agent, and it is possible to prevent the slag having great grain from being discharged directly into the air bag. Thus, the air bag is properly developed by a large amount of clean gas discharged from the gas generator without being damaged by hot slag.

A third invention relates to a gas generator for developing a passenger-side air bag or an air bag for side collision of an automobile in which the gas generating agent in the filter member is burned from the shaft end side of the housing to which the igniter is mounted. In this gas generator, the filter member is so constructed that the shaft end side of the housing to which the igniter is mounted is more difficult to allow the hot gas to pass therethrough than a portion of the housing closer to the other shaft end and the filter member becomes easier to allow the hot gas to pass therethrough from the shaft end side of the housing to which the igniter is mounted toward the other shaft end. If the igniter is ignited, the combustion of the gas generating agent in the filter member is started from the shaft end side of the housing to which the igniter is mounted to generate the hot gas. The hot gas generated in the filter member flows in from the shaft end side of the housing to which the igniter is mounted with respect to the filter member at the same time, the gas also flows from the other portion where it is easy to allow the gas to pass therethrough via the filter member.

With this structure, it is possible to distribute the hot gas generated in the filter member from the beginning of combustion of the gas generating agent, and it is possible to prevent the gas from concentrating on a portion where the gas generating agent is burned by the igniter. The gas passing efficiency to the axial direction of the filter member can be finely classified toward the other shaft end of the housing, and it is possible to reliably distribute the hot gas over the axial direction of the housing.

Therefore, according to the third invention, the entire region of the filter member can be effectively utilized, and the slag collecting efficiency and the cooling efficiency of the hot gas can be enhanced. In the third invention, since the hot gas does not concentrate on shaft end side of the housing to which the igniter is mounted, it is possible to prevent the filter member from being thermally melted at the initial stage of combustion of the gas generating agent, and it is possible to prevent the slag having great grain from being discharged directly into the air bag. Thus, the air bag is properly developed by a large amount of clean gas discharged from the gas generator without being damaged by hot slag.

A fourth invention relates to a gas generator for developing a passenger-side air bag or an air bag for side collision of an automobile in which the gas generating agent in the filter member is burned from the shaft end side of the housing to which the igniter is mounted. In this gas generator, the filter member is so constructed that passing efficiency of the hot gas is differentiated in an axial direction of the housing by increasing or reducing porosity formed by a constituent member of filter or by increasing or reducing thickness of the constituent member of the filter in its diametrical direction by the number of layers, and the filter member is so constructed that the shaft end side of the housing to which the igniter is mounted is more difficult to allow the hot gas to pass therethrough than a portion of the housing closer to the other shaft end and the filter member becomes easier to allow the hot gas to pass therethrough from the shaft end side of the housing to which the igniter is mounted toward the other shaft end. If the igniter is ignited, the combustion of the gas generating agent in the filter member is started from the shaft end side of the housing to which the igniter is mounted to generate the hot gas. The hot gas generated in the filter member flows in from the shaft end side of the housing to which the igniter is mounted with respect to the filter member at the same time, the gas also flows from the other portion where it is easy to allow the gas to pass therethrough via the filter member.

With this structure, it is possible to distribute the hot gas generated in the filter member from the beginning of combustion of the gas generating agent, and it is possible to prevent the gas from concentrating on a portion where the gas generating agent is burned by the igniter. The gas passing efficiency to the axial direction of the filter member can be finely classified toward the other shaft end of the housing, and it is possible to reliably distribute the hot gas over the axial direction of the housing.

Therefore, according to the fourth invention, the entire region of the filter member can be effectively utilized, and the slag collecting efficiency and the cooling efficiency of the hot gas can be enhanced. In the fourth invention, since the hot gas does not concentrate on shaft end side of the housing to which the igniter is mounted, it is possible to prevent the filter member from being thermally melted at the initial stage of combustion of the gas generating agent, and it is possible to prevent the slag having great grain from being discharged directly into the air bag. The shaft end side of the housing to which the igniter is mounted can be strengthened with the simple structure in which the porosity and thickness in the diametrical direction are increased or reduced by the constituent member of the filter. Therefore, it is possible to prevent the filter member from being thermally melted by the hot gas. Thus, the air bag is properly developed by a large amount of clean gas discharged from the gas generator without being damaged by hot slag.

A fifth invention relates to a gas generator for developing a passenger-side air bag or an air bag for side collision of an automobile in which the gas generating agent in the filter member is burned from the shaft end side of the housing to which the igniter is mounted. In this gas generator, the filter member is so constructed that passing efficiency of the hot gas is differentiated in an axial direction of the housing by increasing or reducing porosity formed by a constituent member of filter or by increasing or reducing thickness of the constituent member of the filter in its diametrical direction by the number of layers, and the filter member is so constructed that the shaft end side of the housing to which the igniter is mounted is more difficult to allow the hot gas to pass therethrough than a portion of the housing closer to the other shaft end. If the igniter is ignited, the combustion of the gas generating agent in the filter member is started from the shaft end side of the housing to which the igniter is mounted to generate the hot gas . The hot gas generated in the filter member flows in from the shaft end side of the housing to which the igniter is mounted with respect to the filter member at the same time, the gas also flows from the other portion where it is easy to allow the gas to pass therethrough via the filter member.

With this structure, it is possible to distribute the hot gas generated in the filter member from the beginning of combustion of the gas generating agent, and it is possible to prevent the gas from concentrating on a portion where the gas generating agent is burned by the igniter.

Therefore, according to the fifth invention, the entire region of the filter member can be effectively utilized, and the slag collecting efficiency and the cooling efficiency of the hot gas can be enhanced. In the fifth invention, since the hot gas does not concentrate on shaft end side of the housing to which the igniter is mounted, it is possible to prevent the filter member from being thermally melted at the initial stage of combustion of the gas generating agent, and it is possible to prevent the slag having great grain from being discharged directly into the air bag. The shaft end side of the housing to which the igniter is mounted can be strengthened with the simple structure in which the porosity and thickness in the diametrical direction are increased or reduced by the constituent member of the filter. Therefore, it is possible to prevent the filter member from being thermally melted by the hot gas . Thus, the air bag is properly developed by a large amount of clean gas discharged from the gas generator without being damaged by hot slag.

A sixth invention relates to a gas generator for developing a passenger-side air bag or an air bag for side collision of an automobile in which the gas generating agent in the filter member is burned from the shaft end side of the housing to which the igniter is mounted. In this gas generator, the filter member comprises a plurality of filter units. The filter units are so constructed that the shaft end side of the housing to which the igniter is mounted is more difficult to allow the hot gas to pass therethrough than a portion of the housing closer to the other shaft end. If the igniter is ignited, the combustion of the gas generating agent in the filter member is started from the shaft end side of the housing to which the igniter is mounted to generate the hot gas. The hot gas generated in the filter member flows in from the shaft end side of the housing to which the igniter is mounted with respect to the filter member at the same time, the gas also flows from the other portion where it is easy to allow the gas to pass therethrough via the filter member.

With this structure, it is possible to distribute the hot gas generated in the filter member from the beginning of combustion of the gas generating agent, and it is possible to prevent the gas from concentrating on a portion where the gas generating agent is burned by the igniter.

Therefore, according to the sixth invention, the entire region of the filter member can be effectively utilized, and the slag collecting efficiency and the cooling efficiency of the hot gas can be enhanced. In the sixth invention, since the hot gas does not concentrate on shaft end side of the housing to which the igniter is mounted, it is possible to prevent the filter member from being thermally melted at the initial stage of combustion of the gas generating agent, and it is possible to prevent the slag having great grain from being discharged directly into the air bag. Thus, the air bag is properly developed by a large amount of clean gas discharged from the gas generator without being damaged by hot slag. Further, in the sixth invention, if a plurality of filter units having different gas passing efficiency are prepared and each filter unit is continuously provided between the opposite shaft ends, it is possible to easily dispose the filter member in accordance with length of the housing.

In each of the third to fifth inventions, the filter member comprises a plurality of divided cylindrical filter units.

With this structure, if a plurality of filter units having different gas passing efficiency are prepared and they are continuously provided between the opposite shaft ends, it is possible to easily dispose the filter member in accordance with length of the housing.

In each of the first to sixth inventions, the gas discharging holes are formed in an axial direction of the housing including the opposite shaft end sides.

With this structure, the hot gas distributed in the axial direction of the housing by the filter member can be discharged into the air bag over the axial direction of the housing.

### BRIEF DESCRIPTION OF THE DRAWINGS

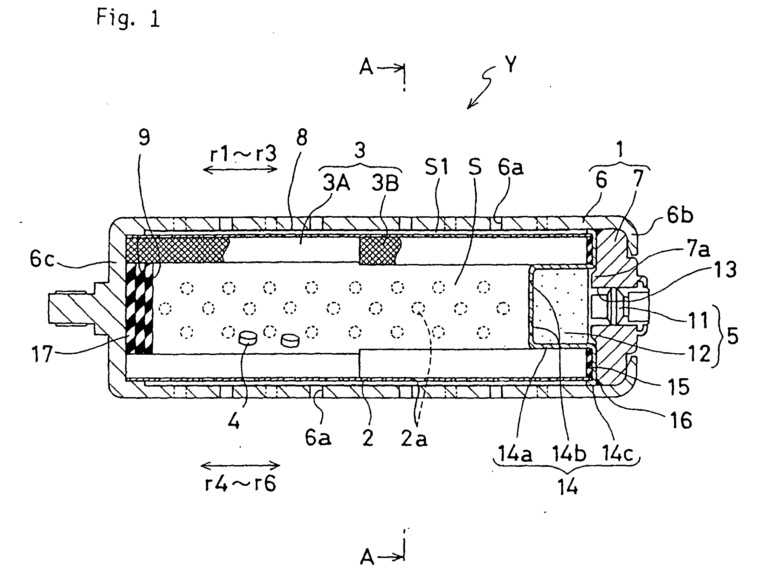

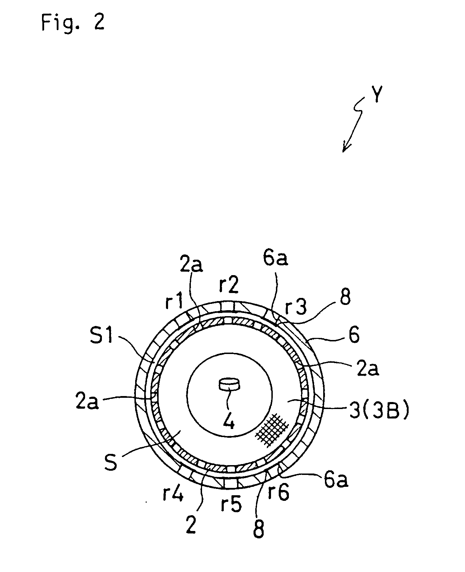

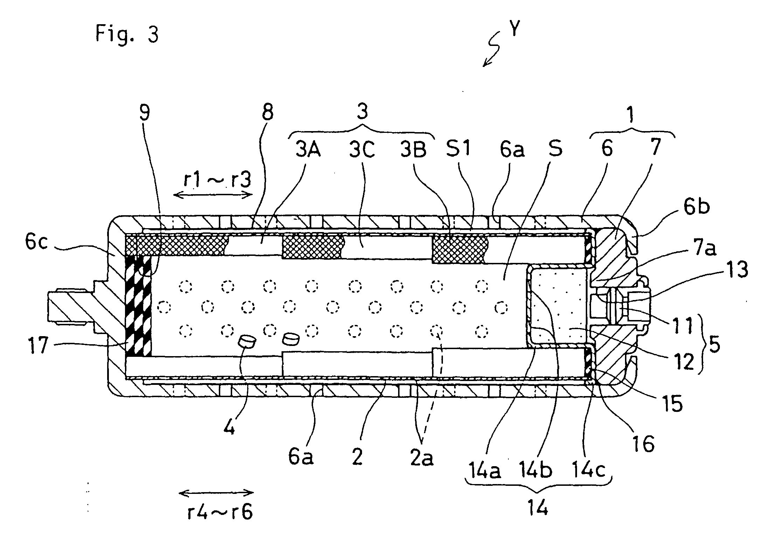

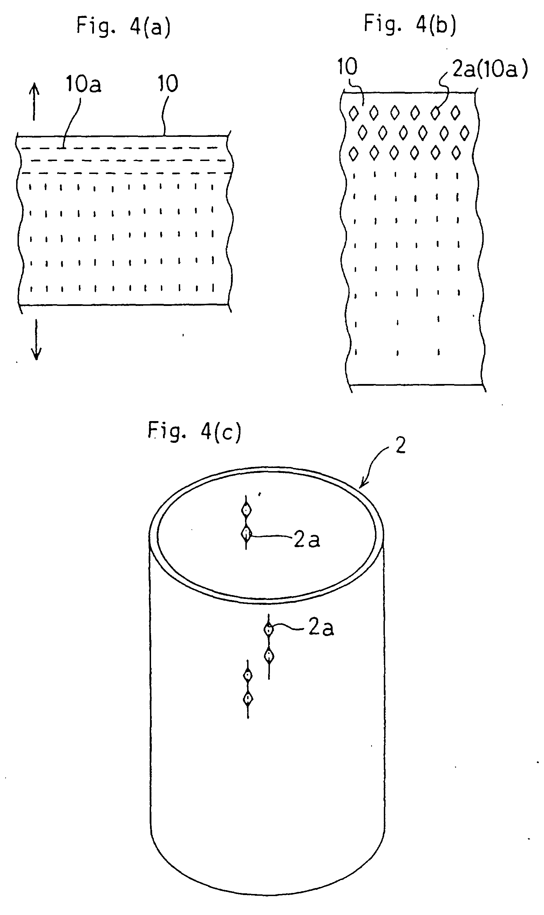

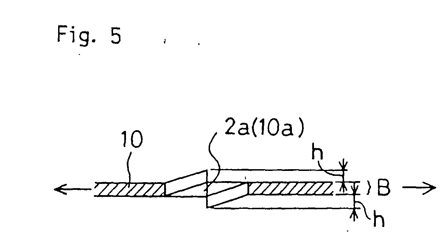

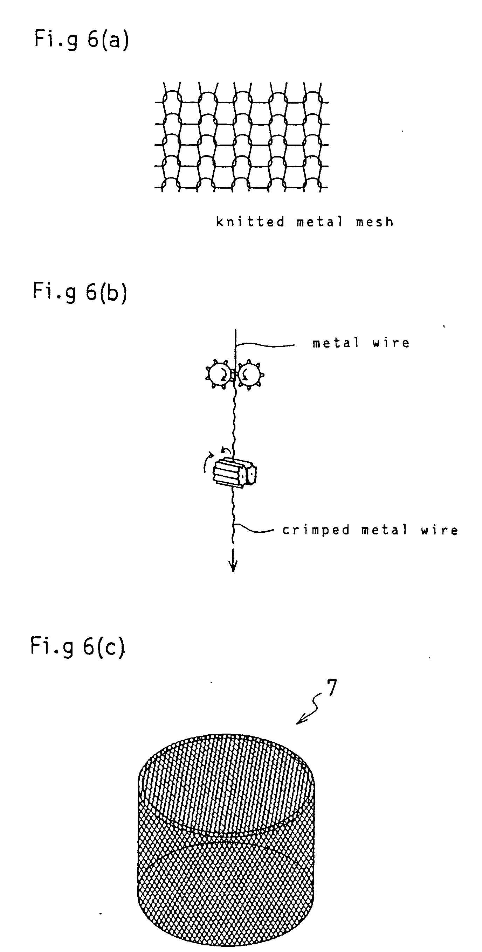

Fig. 1 is a sectional view showing a gas generator used for a passenger-side air bag or an air bag for side collision of the present invention, and Fig. 2 is a sectional view taken along the line A-A in Fig. 1. Fig. 3 is a sectional view showing another gas generator used for the passenger-side air bag or the air bag for side collision. Figs. 4 are views showing an expanded metal forming an inner cylinder member, and Fig. 5 is a view showing a tensile state of the expanded metal shown in Figs. 4. Figs. 6 are views showing a knitted metal mesh and a crimped metal wire forming a filter member. Fig. 7 is a sectional view showing a conventional gas generator used for the passenger-side air bag or the air bag for side collision.

### BEST MODE FOR CARRYING OUT THE INVENTION

The present invention will be explained in more detail with reference to the accompanying drawings.

A gas generator Y shown in Fig. 1 is for developing a passenger-side air bag or an air bag for side collision. This gas generator Y comprises a long cylindrical housing 1, and an inner cylindrical member 2, a filter member 3 and a gas generating agent 4 all disposed in a housing 1, and an igniter 5 for burning the gas generating agent 4 from a direction of one of shaft ends of the housing 1.

The housing 1 comprises a long outer cylinder 6 whose one end is closed, and a lid member 7 for closing an opening of the outer cylinder 6. A combustion space S is formed in the housing 1 by fitting the lid member 7 into the outer cylinder 6 from its opening end, and by bending a swaging projection 6b projecting axially from the opening end of the outer cylinder 6 diametrically inwardly.

A plurality of gas discharging holes 6a are formed in an inner periphery of the outer cylinder 6. The gas discharging holes 6a are in communication with the air bag (not shown) through the combustion space S. As shown in Fig. 2, the gas discharging holes 6a are formed in circumferential direction at locations apart from one another through 180° for example. The gas discharging holes 6a are disposed as gas hole rows r1 to r3 and r4 to r6 which are formed three each at each of the locations. The gas discharging holes 6a of the gas hole rows r1 to r6 are sequentially formed in the axial direction at predetermined distances from one another from the lid member 7 to a bottom 6c of the outer cylinder 6 of the housing 1. The gas discharging holes 6a of the gas hole rows r1 to r6 are closed by band-like burst plates 8 pasted on an inner periphery of the outer cylinder 6. Each of the burst plates 8 is made of metal foil such as aluminum, and functions for moisture-proofing in the combustion space S of the housing 1 and for adjusting internal pressure at the time of combustion. Each the burst plate 8 has length and width enough to close the gas discharging hole 6a of each the gas hole row r1 to r6. As the burst plates 8, one sheet of plate is pasted over the inner periphery of the outer cylinder 6 is not excluded.

The inner cylindrical member 2, the filter member 3 and the gas generating agent 4 are disposed in the combustion space S of the housing 1 in this order from the outer cylinder 6 toward the axial center. The filter member 3 is provided therein with a cushion member 17 for preventing the gas generating agent 4 from being disintegrated. The cushion member 17 is fitted into the inner periphery of the filter member 3 and disposed on the bottom 6c of the outer cylinder 6.

The inner cylindrical member 2 is formed cylindrically. The inner cylindrical member 2 is press-fitted into a diameter-reduced step 9 formed on the bottom 6c of the outer cylinder 6, and extends to the lid member 7 in the axial direction of the housing 1. With this structure, an annular gas-passing space S1 is formed between the inner cylindrical member 2 and the inner periphery of the outer cylinder 6. A plurality of gas-passing holes 2a for bringing the inner cylindrical member 2 and the gas-passing space S1 into communication with each other. As shown also in Fig. 2, the gas-passing holes 2a are opened at predetermined distances from one another as viewed from the circumferential direction of the housing 1, and the gas-passing holes 2a are formed in the axial direction of the housing 1.

This inner cylindrical member 2 can be formed using an expanded metal shown in Figs. 4. As shown in Fig. 4 (a), in this expanded metal, the gas-passing holes 2a shown in Fig. 4 (b) are opened by equally pulling a base material 10 formed with a large number of slits 10a at predetermined distances from one another. As shown in Fig. 4(c), the inner cylindrical member 2 is formed by forming an expanded metal having predetermined length and width into a cylindrical shape and then, connecting ends thereof to each other by a connecting method such as spot welding. A stainless thin steel plate having excellent heat resistance and pressure resistance or a thin steel plate other than stainless steel is used as the base material 10.

The inner cylindrical member 2 made of expanded metal is formed into such a shape that portions of the slits 10a are warped toward inner and outer peripheries by a height h from a flat surface B of the base material 10 as shown in Fig. 5 when the inner cylindrical member 2 is pulled in a direction of arrow shown in Fig. 4 (a) . Therefore, in the inner cylindrical member 2, the gas-passing holes 2a are formed such as to open in the circumferential direction of the housing 1 and extend in the axial direction by the projection of the portions of the slits 10a toward the inner and outer peripheries. The inner cylindrical member 2 has a structure in which the gas-passing holes 2a are brought into communication with each other in the circumferential direction by the projection of the portion of the slits 10a toward the inner and outer peripheries. The inner cylindrical member 2 made of expanded metal is mounted in the housing 1, which makes it possible to allow the hot gas to pass toward the gas discharging holes 6a from the gas-passing holes 2a which projecting toward the inner and outer peripheries by the height h even if the inner cylindrical member 2 is expanded and deformed by the hot gas generated in the combustion space S. With this arrangement, even if the inner cylindrical member 2 made of expanded metal is disposed such that it is in contact with an inner periphery of the outer cylinder 6, the continuos annular space can be formed at the side of the inner periphery of the outer cylinder 6, and this annular space can be used as a gas passing space S1.

The inner cylindrical member 2 is not limited to one made of expanded metal, and the inner cylindrical member 2 may be made of porous thin steel plate. The porous thin steel plate is a punching metal plate formed with a plurality of gas-passing holes 2a at predetermined distances from one another. The inner cylindrical member 2 is formed in such a manner that the porous thin steel plate is formed into a cylindrical shape and then, the ends thereof are joined to each other by a connecting method such as spot welding. In the case of the inner cylindrical member 2 made of porous thin steel plate, it is necessary to provide a gap which forming the gas-passing space S1 between the inner cylindrical member 2 and the inner periphery of the outer cylinder 6.

The filter member 3 comprises two cylindrical filter unit 3A and 3B which are continuously formed in the axial direction between both shaft ends (between the bottom 6c of the outer cylinder 6 and the lid member 7) of the housing 1. The filter member 3 is tightly inserted into the inner cylindrical member 2 from the opening side (the lid member 7 side) of the outer cylinder 6. The filter unit 3A is inserted to the diameter-reduced step 9 together with the inner cylindrical member 2, and is located at the side of the bottom 6c of the outer cylinder 6. The filter unit 3B is located at the side of the lid member 7 continuously with the filter unit 3A. The filter member 3 is constituted such that it is more difficult for the hot gas to pass through the filter unit 3B as compared with the filter unit 3A, so that the passing ability of the gas in the axial direction of the housing 1 is changed. The gas generating agent 4 is disposed in the filter member 3. The gas generating agent 4 is charged in the axial direction of the housing 1.

The filter units 3A and 3B can be formed inexpensively by employing knitted metal mesh as shown in Fig. 6(a) or a crimped metal wire as shown in Fig. 6(b). Each of the filter units 3A and 3B can be formed by forming the knitted metal mesh or an aggregate of the crimped metal wires into a cylindrical shape shown in Fig. 6(c) or by winding into a coil shape. It is more difficult for gas to pass through the filter unit 3B as compared with the filter unit 3A made of metal mesh or metal wire. A concrete structure of the filter units 3A and 3B, the following structure can be employed.

The porosity δ of both the filter units 3A and 3B is set equal, the number of metal meshes or metal wires of the filter unit 3B is set greater than that of the filter unit 3B so that thickness of the filter unit 3B in its diametrical direction is increased and internal diameter of the filter unit 3B is reduced.

The thickness of the filter units 3A and 3B is set equal, the number of metal meshes or metal wires of the filter unit 3B is set denser than that of the filter unit 3A, so that the porosity δ of the filter member 3B is reduced. Here, the porosity δ means a rate of gaps formed by the metal mesh or metal wire which is constituent member of the filter.

This filter member 3 allows hot gas to flow into the filter unit 3B by combustion of the gas generating agent 4 from the one shaft end of the housing 1, and allows the hot gas to flows also into the filter unit 3A through which the hot gas easily passes through as compared with the filter unit 3B. With this arrangement, the filter member 3 can distribute the hot gas in the axial direction of the housing 1.

Further, as shown in Figs. 1 and 3, with the gas generator Y employing the inner cylindrical member 2, the inner cylindrical member 2 can be utilized as means for differentiating the gas passing efficiency of the filter units 3A and 3B.

More specifically, the number of the gas-passing hole 2a of the inner cylindrical member 2 in the vicinity of the igniter 5 is reduced, and is gradually increased toward the other shaft end of the housing 1. The diameter of the gas-passing hole 2a of the inner cylindrical member 2 in the vicinity of the igniter 5 is reduced, and is gradually increased toward the other shaft end of the housing 1. Further, the pitch of the gas-passing hole 2a of the inner cylindrical member 2 in the vicinity of the igniter 5 is increased, and is gradually reduced toward the other shaft end of the housing 1. By appropriately changing at least one of the number, the diameter and the pitch of the gas-passing holes 2a of the inner cylindrical member 2 in this manner, it is possible to differentiate the gas passing efficiency of the filter member 3 without changing the thickness in the diametrical direction and the porosity δ of the filter units 3A and B, and the filter member can have both a structure in which hot gas can easily pass therethrough and a structure in which hot gas can not easily pass therethrough.

The igniter 5 is ignited by an impact detection signal from an impact sensor, and comprises an ignition tool 11 and an inflammation agent 12 which is ignited by the ignition tool 11. The igniter 5 is mounted to the lidmember 7 which constitutes the one shaft end of the housing 1, and burns the gas generating agent 4 in the filter member 3 from this shaft end. The ignition tool 11 is swaged in its tightly closed state within an accommodation hole 13 formed in a projection 7a of the lid member 7. The accommodation hole 13 is in communication with the filter member 3 . The inflammation agent 12 is accommodated in a flanged cap 14. The flanged cap 14 is fitted around the projection 7a of the lid member 7 from inside of the housing 1 such that the inflammation agent 12 is opposed to the projection 7a at a distance.

A projection 14a of the flanged cap 14 is mounted in the filter unit 3B of the filter member 3. The projection 14a of the cap 14 includes through holes 14b for injecting flame of the inflammation agent 12 into the filter member 3. A flange 14c of the cap 14 is interposed between the filter unit 3B and the lid member 7. The flange 14c of the cap 14 extends to the inner periphery of the outer cylinder 6, and is sandwiched between the lid member 7, the filter unit 3B and the inner cylindrical member 2. The flange 14c of the cap 14 is brought into resilient contact with an annular seal member 15 which closes the lidmember 7 of the filter unit 3B, and a seal ring 16 interposed between the lid member 7 and the seal member 15. The flange 14c tightly closes the combustion space S of the housing 1 from outside.

Next, operation of the gas generator Y will be explained.

If the impact sensor detected an impact of the automobile, the ignition tool 11 of the igniter 5 is ignited to ignite the inflammation agent 12. The flame of the inflammation agent 12 is injected into the filter unit 3B of the filter member 3 from the through holes 14b of the cap 14, this flame burns the gas generating agent 4 from the lid member 7 (the one shaft end of the housing 1), thereby generating hot gas.

This hot gas at the time of initial combustion flows directly into the filter unit 3B from a portion ("burning portion", hereinafter) of the inflammation agent 12 that burns the gas generating agent 4 by the flame. However, it is more difficult for gas to pass through the filter unit 3B than the filter unit 3A which is located at the other shaft end of the housing 1. Therefore, most of the hot gas can not flow into the filter unit 3B from the burning portion, and flows toward the bottom 6c of the outer cylinder 6 which is the other shaft end of the housing 1.

Then, the hot gas sequentially flows toward the bottom 6c of the outer cylinder 6, and flows into the filter unit 3B from portion other than the burning portion, and hot gas which could not flows into the filter unit 3B flows into the filter unit 3A. This is because that the gas passing efficiency of the filter member 3 is changed in the axial of the housing 1, and it is more difficult for gas to pass through the filter unit 3B than the filter unit 3A. That is, since it is more difficult for gas to pass through the filter unit 3B than the filter unit 3A, the hot gas which could not flow into the filter unit 3B is introduced to the filter unit 3A through which the gas can easily pass, and the hot gas can flows into the filter unit 3A.

With this arrangement, hot gas at the time of initial combustion is distributed over the axial direction of the filter member 3 without being collected to the burning portion. Therefore, the entire region of the filter member 3 is utilized, and it is possible to reliably carry out the slag collection and cooling operation of the hot gas.

Further, since the hot gas is not collected to the burning portion, the filter (metal mesh or metal wire) is prevented from being melted by the combustion. With this feature, slag having large grain generated at the time of initial combustion is collected by the filter member 3 and is not discharged out from the housing 1, and the air bag is not thermally damaged. The filter unit 3B can be strengthened by increasing its thickness in the diametrical direction or by reducing the porosity δ, and the it is possible to prevent the filter unit 3B from being thermally melted by hot gas.

The hot gas flowed into the filter unit 3Aor 3B is subjected to slag collection treatment and is cooled, and flows into the gas-passing space S1 from the gas-passing holes 2a of the inner cylindrical member 2. When combustion of the gas generating agent 4 proceeded and the pressure in the combustion space S of the housing 1 reached a predetermined value, the burst plates 8 is burst. Gas which was cleaned by the filter unit 3A or 3B is discharged into the air bag from the gas discharging holes 6a to instantaneously develop the air bag.

At that time, since the hot gas generated in the housing 1 is distributed in the axial direction of the housing 1 (filter member 3), the clean gas discharged from the gas discharging holes 6a is equalized. The air bag is smoothly developed in an unbiased manner by the clean gas equally discharged from the axial direction of the housing 1.

As described above, according to the gas generator Y of the invention, the hot gas at the time of the initial combustion is distributed in the axial direction of the filter member 3 (filter units 3A and 3B), thereby preventing the gas from concentrating on the combustion portion. Therefore, the entire region of the filter member 3 can be effectively utilized, and the slag collecting efficiency and the cooling efficiency of the hot gas can be enhanced.

Since the hot gas does not concentrate on the combustion portion of the filter unit 3B, it is possible to prevent the filter (metal mesh or metal wire) at the combustion portion from being thermally melted. Therefore, it is also possible to prevent the slag having great grain from being discharged directly into the air bag.

Further, since the hot gas is distributed in the axial direction of the filter member 3, the clean gas can equally be discharged from the gas discharging holes 6a formed in the axial direction of the housing 1. Therefore, the air bag can be developed smoothly in an unbiased manner.

If the gas discharging holes 6a are formed in the axial direction of the housing 1, it is possible to allow the hot gas to flow in the entire filter member 3, and the slag collecting efficiency and the cooling efficiency of the hot gas can be enhanced.

In the gas generator Y shown in Figs. 1 and 2, the filter member 3 is divided into two units, i.e., the filter units 3A and 3B, and they are continuously provided in the axial direction of the housing 1. Alternatively, as shown in Fig. 3, the filter member 3 may be divided into three filter units 3A, 3B and 3C. According to the gas generator Y shown in Fig. 3, these filter units 3A, 3B and 3C are formed such that it is most difficult for gas to pass through the filter unit 3B at the side of the lid member 7, it is less difficult for gas to pass through the medium filter unit 3C, and it is less difficult for gas to pass through the filter unit 3A of the bottom 6c of the outer cylinder 6. As described above, each of the filter units 3A, 3B and 3C is formed such that its thickness in the diametrical direction is increased or reduced, or its porosity δ is increased or reduced. With this arrangement, the gas passing efficiency in the axial direction of the filter member 3 can be finely classified, and it is possible to reliably distribute the hot gas over the axial direction of the housing 1.

The filter member 3 is divided into two or three units in the above description, but the filter member 3 may be divided into four or more in a stepless manner.

The filter member 3 is not limited to one comprising the divided filter units 3A and 3B. The filter member 3 may be formed by press-forming metal mesh or metal wire which is constituent member of the filter such that its layer thickness or porosity δ is changed in the axial direction, and winding the same into a coil-like shape to integrally form the same. In this case, the filter member 3 is formed such that it is difficult for gas to pass at the side of the lid member 7, and it becomes gradually easier for gas to pass toward the bottom 6c of the outer cylinder 6. With this arrangement, the gas passing efficiency in the axial direction of the filter member 3 can be finely divided, and it is possible to reliably distribute the hot gas over the axial direction of the housing 1.

The filter member 3 (filter units 3A and 3B) may be made of not only knitted metal mesh and crimped metal wire, but also metal fiber sheet, combination of metal mesh and metal fiber sheet which is press-formed into cylindrical shape, combination of metal mesh, metal fiber sheet and nonmetal fiber sheet which is press-formed into cylindrical shape or is wound in a coil-like manner into cylindrical shape. The filter member 3 (filter units 3A and 3B) may be formed in such a manner that a plurality of metal mesh layers are laminated, the laminated metal mesh layers are compressed while heating and softening the same to form a sintered body in which mainly wires intertwined, and the sintered body is formed into cylindrical shape. Further, the filter member 3 (filter units 3A and 3B) may be formed by winding the expanded metal shown in Figs. 4 and 5.

Although the housing 1 comprises the long outer cylinder 6 whose one end is closed and the lid member 7 for closing the opening of the outer cylinder 6 in the above description, the housing 1 is not limited to this structure. The housing may comprise a long outer cylinder 6 whose opposite ends are opened, and two lid members for closing the opened opposite ends, and a combustion space may be formed therein. In this case, the lid members are swaged and fixed to the outer cylinder, or the lid members and the outer cylinder are connected to each other by friction welding.

Although the gas generating agent 4 in the filter member 3 is burned by the one igniter 5 in the above description, the gas generator Y of the invention is not limited to this. The gas generator Y may employ a soft inflation technique in which two igniters may be mounted to the shaft ends of the housing, thereby making it possible to control·the expanding and developing action of the air bag. According to a gas generator employing this soft inflation technique, two igniters are ignited with slight time lag so as to slowly expand and develop the air bag at the initial stage of development by a small amount of gas, and after slight time is elapsed, the air bag is rapidly expanded and developed by a large amount of gas.

The filter member 3 is so constructed that the shaft end side of the housing having the igniters is difficult to pass gas therethrough, and the gas can pass easier toward the center in the axial direction of the housing 1 from the shaft ends. With this structure, the hot gas does not concentrate on the igniters, and the entire filter can be efficiently be utilized.

The filter member 3 is not limited to the structure in which the shaft end side of the housing having the igniters is difficult to pass gas therethrough. In short, the filter member 3 may be constructed such that it is difficult for gas to pass through a portion where the gas generating agent 4 which is burned by the igniter 5, and in accordance with the mounting state of the igniter 5, a structure which is difficult to pass gas therethrough and a structure which is easy to pass gas therethrough.

### INDUSTRIAL APPLICABILITY

As described above, the gas generator of the present invention is suitable for developing a passenger-side air bag or an air bag for side collision.

## Claims

1. A gas generator comprising a cylindrical filter member (3) disposed in a long cylindrical housing (1) having a plurality of gas discharging holes (6a), a gas generating agent (4) mounted in the filter member (3) for generating hot gas by combustion, and an igniter (5) mounted in said housing (1) for burning said gas generating agent (4) in said filter member (3), wherein said filter member (3) comprises a structure which is easy to pass hot gas therethrough and a structure which is difficult to pass hot gas therethrough.

2. A gas generator comprising a cylindrical filter member (3) disposed in a long cylindrical housing (1) having a plurality of gas discharging holes (6a) between opposite shaft ends of the housing (1), a gas generating agent (4) mounted in the filter member (3) for generating hot gas by combustion, and an igniter (5) mounted to one of shaft ends of said housing (1) for burning said gas generating agent (4) in said filter member (3) from said shaft end side, wherein said filter member (3) is so constructed that the shaft end side of said housing (1) to which said igniter (5) is mounted is more difficult to allow the hot gas to pass therethrough than a portion of the housing (1) closer to the other shaft end.

3. A gas generator comprising a cylindrical filter member (3) disposed in a long cylindrical housing (1) having a plurality of gas discharging holes (6a) between opposite shaft ends of the housing (1), a gas generating agent (4) mounted in the filter member (3) for generating hot gas by combustion, and an igniter (5) mounted to one of shaft ends of said housing (1) for burning said gas generating agent (4) in said filter member (3) from said shaft end side, wherein said filter member (3) is so constructed that the shaft end side of said housing (1) to which said igniter (5) is mounted is more difficult to allow the hot gas to pass therethrough than a portion of the housing (1) closer to the other shaft end and said filter member (3) becomes easier to allow the hot gas to pass therethrough from the shaft end side of said housing (1) to which said igniter (5) is mounted toward the other shaft end.

4. The gas generator according to claim 3, wherein said filter member (3) comprises a plurality of divided cylindrical filter units (3B, 3C, 3A), the filter units (3B, 3C, 3A) are continuously provided between the opposite ends of said housing (1).

5. A gas generator comprising a cylindrical filter member (3) disposed in a long cylindrical housing (1) having a plurality of gas discharging holes (6a) between opposite shaft ends of the housing (1), a gas generating agent (4) mounted in the filter member (3) for generating hot gas by combustion, and an igniter (5) mounted to one of shaft ends of said housing (1) for burning said gas generating agent (4) in said filter member (3) from said shaft end side, wherein said filter member (3) is so constructed that passing efficiency of the hot gas is differentiated in an axial direction of said housing (1) by increasing or reducing porosity formed by a constituent member of filter or by increasing or reducing thickness of the constituent member of the filter in its diametrical direction by the number of layers, and said filter member (3) is so constructed that the shaft end side of said housing (1) to which said igniter (5) is mounted is more difficult to allow the hot gas to pass therethrough than a portion of the housing (1) closer to the other shaft end and said filter member (3) becomes easier to allow the hot gas to pass therethrough from the shaft end side of said housing (1) to which said igniter (5) is mounted toward the other shaft end.

6. The gas generator according to claim 5, wherein said filter member (3) comprises a plurality of divided cylindrical filter units (3B, 3C, 3A), the filter units (3B, 3C, 3A) are continuously provided between the opposite ends of said housing (1).

7. A gas generator comprising a cylindrical filter member (3) disposed in a long cylindrical housing (1) having a plurality of gas discharging holes (6a) between opposite shaft ends of the housing (1), a gas generating agent (4) mounted in the filter member (3) for generating hot gas by combustion, and an igniter (5) mounted to one of shaft ends of said housing (1) for burning said gas generating agent (4) in said filter member (3) from said shaft end side, wherein said filter member (3) is so constructed that passing efficiency of the hot gas is differentiated in an axial direction of said housing (1) by increasing or reducing porosity formed by a constituent member of filter or by increasing or reducing thickness of the constituent member of the filter in its diametrical direction by the number of layers, and said filter member (3) is so constructed that the shaft end side of said housing (1) to which said igniter (5) is mounted is more difficult to allow the hot gas to pass therethrough than a portion of the housing (1) closer to the other shaft end.

8. The gas generator according to claim 7, wherein said filter member (3) comprises a plurality of divided cylindrical filter units (3B, 3C, 3A), the filterunits (3B, 3C, 3A) are continuously provided between the opposite ends of said housing (1).

9. A gas generator comprising a cylindrical filter member (3) disposed in a long cylindrical housing (1) having a plurality of gas discharging holes (6a) between opposite shaft ends of the housing (1), a gas generating agent (4) mounted in the filter member (3) for generating hot gas by combustion, and an igniter (5) mounted to one of shaft ends of said housing (1) for burning said gas generating agent (4) in said filter member (3) from said shaft end side, wherein said filter member (3) comprises a plurality of divided cylindrical filter units (3B, 3C, 3A) continuously provided between the opposite ends of said housing, said filter member (3) is so constructed that the shaft end side of said housing (1) to which said igniter (5) is mounted is more difficult to allow the hot gas to pass therethrough than a portion of the housing (1) closer to the other shaft end.

10. The gas generator according to any one of claims 1 to 9, wherein said gas discharging holes (6a) are formed in an axial direction of said housing (1) including said opposite shaft end sides.
